Europäisches Patentamt

European Patent Office

Office européen des brevets

(11) Numéro de publication: **0 090 723**
**A1**

## (12) DEMANDE DE BREVET EUROPÉEN

(21) Numéro de dépôt: **83400592.8**

(22) Date de dépôt: **22.03.83**

(51) Int. Cl.³: **G 02 B 7/26**

(30) Priorité: **30.03.82 FR 8205440**

(43) Date de publication de la demande: **05.10.83**
**Bulletin 83/40**

(84) Etats contractants désignés: **DE GB IT NL**

(71) Demandeur: **SOCAPEX, 10 bis, quai Léon-Blum,**
**F-92153 Suresnes (FR)**

(72) Inventeur: **Legrand, Jacques, THOMSON-CSF**
**SCPI 173, bld Haussmann, F-75379 Paris Cedex 08 (FR)**

(74) Mandataire: **Jacquard, Philippe et al, THOMSON-CSF**
**SCPI 173, Bld Haussmann, F-75379 Paris Cedex 08 (FR)**

(54) Commutateur optique et matrice de commutation comprenant de tels commutateurs.

(57) L'invention concerne un commutateur optique. Il comporte une paroi transparente (1) traversée par un rayon lumineux (6) et un moyen, par exemple une plaquette (11, 12) pour déplacer un liquide (7, 8) le long de cette paroi (1) de manière à l'interposer sur le passage du rayon lumineux (6).

EP 0 090 723 A1

## COMMUTATEUR OPTIQUE ET MATRICE DE COMMUTATION
## COMPRENANT DE TELS COMMUTATEURS

La présente invention a pour objet un commutateur optique, c'est-à-dire un dispositif qui permet soit d'obturer momentanément un signal lumineux propagé notamment par une fibre optique, soit en obturant le signal à la sortie de la fibre, de le renvoyer parcourir le chemin inverse dans la même fibre par un effet de miroir, soit encore d'orienter un signal lumineux notamment émergeant d'une fibre optique dans une ou plusieurs directions déterminées, ce qui peut, par exemple, en assurer la propagation dans une autre fibre optique choisie.

Les commutateurs existants mettent en oeuvre des déplacements de pièces mécaniques supportant des miroirs ou des prismes, etc...

L'inconvénient de tels systèmes réside dans l'obligation d'ajuster avec une extrême précision des pièces mécaniques mobiles de façon à diriger le faisceau optique dans une direction très précise. Pour la même raison, le débattement et la position apres déplacement doivent être réglés avec une très grande précision.

Outre que ces inconvénients présentent des difficultés technologiques de réalisation importantes, la précision requise pour l'ajustage conduit à réaliser des systèmes onereux. De plus, la fiabilite dans le temps de tels systèmes n'est pas garantie.

La présente invention a pour objet un commutateur optique ne présentant pas ces inconvénients et qui conduit donc à une réalisation économique et fiable.

Elle a également pour objet une matrice de commutation comprenant de tels commutateurs.

Un commutateur optique selon l'invention présente à cet effet une paroi transparente traversée en un endroit donné par un rayon lumineux incident, au moins une goutte de liquide étant disposée sur

2

au moins une zone de ladite paroi, cette zone étant mouillable par le liquide et située au voisinage et en dehors de l'endroit où le rayon lumineux traverse la paroi transparente et ledit moyen comporte une pièce mobile à deux positions, une dite de repos pour laquelle ladite goutte repose sur ladite paroi en dehors du passage du rayon lumineux et une dite de travail où elle applique ladite goutte contre la paroi de manière à l'interposer sur le passage du rayon lumineux, et à modifier la propagation de celui-ci.

La zone mouillable peut être bordée sur au moins un de ses côtés non en vis-à-vis de l'endroit où le rayon lumineux traverse la paroi transparente, par une zone plus épaisse de préférence non mouillable de manière à produire une canalisation du liquide ainsi qu'une butée pour la pièce mobile lorsqu'elle se trouve en position de travail.

La pièce mobile peut être une plaquette présentant une région transparente située dans le prolongement du rayon lumineux incident.

La plaquette peut porter un élément en matériau magnétique ou un aimant, solidaire de celle-ci, un moyen de commande électro-magnétique étant prévu pour déplacer la plaquette entre sa position de repos et sa position de travail.

La région transparente de la plaquette peut être une zone centrale de celle-ci et la plaquette, en position de repos, repose sur au moins deux gouttes situées de part et d'autre de la zone centrale transparente. En position de repos, la plaquette peut être également en contact avec une seconde paroi transparente formant avec ladite paroi transparente, un boîtier.

La zone mouillable peut être bordée par une zone plus épaisse l'entourant, à l'exception d'une région de canal où les gouttes se rejoignent lorsque la pièce mobile est en position de travail.

Le liquide peut être réfléchissant et le commutateur peut comporter ou être associé à un moyen pour diriger au moins un rayon lumineux incident perpendiculairement a une dite paroi transparente de manière à générer une fonction interrupteur optique.

3

Le liquide peut être réfléchissant et le commutateur peut comporter ou être associé à un moyen pour diriger au moins un rayon lumineux incident suivant un angle donné avec une dite paroi transparente de manière à générer une fonction déviateur optioque.

Le commutateur peut comporter un moyen pour diriger au moins un rayon lumineux suivant un angle donné avec une dite paroi transparente, de manière à y créer une réflexion totale, et le liquide, un indice tel que, lorsque le commutateur est en position de travail, au moins une partie du rayon lumineux sont transmis. La pièce mobile peut présenter une face de sortie du rayon lumineux perpendiculaire à sa direction incidente.

L'invention concerne également une matrice de commutation comportant une pluralité de tels commutateurs optiques disposés les uns à la suite des autres par rapport à un rayon lumineux incident.

L'invention sera mieux comprise à la lecture de la description qui va suivre donnée à titre d'exemple non limitatif, avec référence aux dessins ci-annexés où :

- les figures 1a et 1b représentent en coupe verticale un mode de réalisation de l'invention respectivement en position de transmission et de réflexion d'un rayon lumineux incident,

- les figures 2a et 2c représentent en coupe verticale des modes de réalisation de l'invention,

- les figures 3a, 3b, 4a, 4b, 5a et 5b représentent deux configurations de surfaces mouillables et non mouillables dans le cadre de l'invention,

- les figures 6a et 6b représentent en coupe verticale un mode de réalisation de l'invention respectivement en position de transmission et de déflection d'un rayon lumineux incident,

- les figures 7a et 7b représentent en coupe verticale une variante des figures 6a et 6b,

- les figures 8a à 8d représentent des coupes verticales et horizontales une variante de l'invention mettant en oeuvre une goutte unique de liquide,

- les figures 9a et 9b représentent en coupe verticale une variante de l'invention mettant en oeuvre une réflexion totale,

- les figures 10a, 10b et 11 représentent des variantes de guidage des gouttes lors de leur écrasement,

- la figure 12 représente une matrice de commutation selon l'invention.

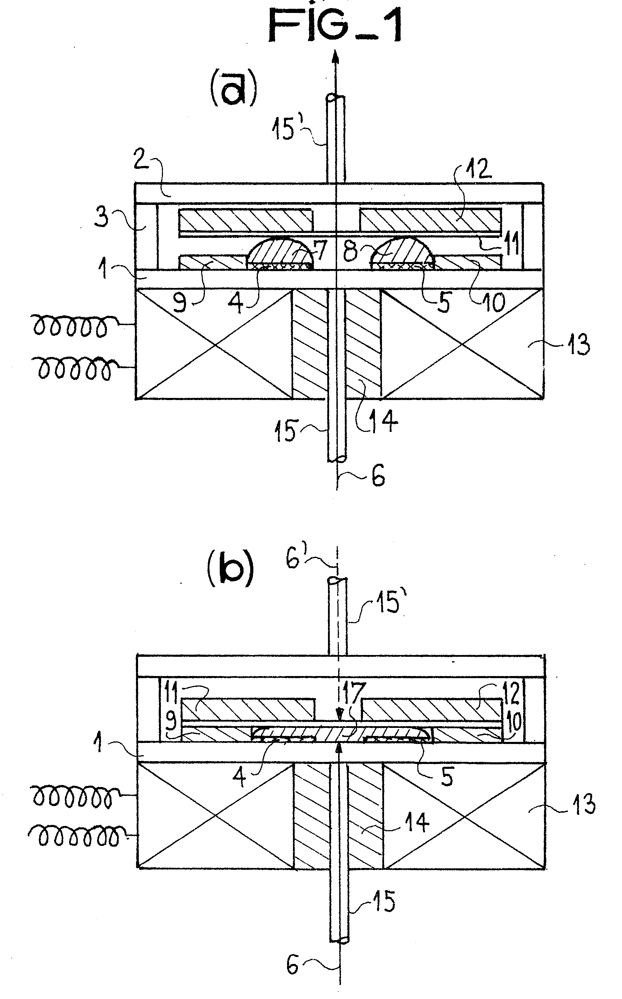

La figure 1a représente une plaque transparente 1 faisant partie d'un boîtier comprenant une seconde plaque transparente 2 disposée au-dessus de la plaque 1 et espacée de celle-ci par une paroi latérale 3 formant entretoise. La plaque transparente 1 comporte sur sa face intérieure au boîtier deux surfaces 4 et 5 mouillables par un liquide réfléchissant la lumière.

Par exemple, pour le mercure, un traitement connu consiste à effectuer un dépôt par exemple de cuivre par les procédés habituels de métallisation, par exemple par évaporation sous vide et à faire suivre le dépôt par un traitement thermique aux environs de 300°C en présence de mercure lorsque le boîtier est scellé.

Les surfaces mouillables sont choisies pour ne pas se situer sur le passage d'un rayon lumineux 6, mais de part et d'autre. Le matériau de la plaque 1 est choisi de telle sorte (verre par exemple) à n'être pas mouillable par le liquide choisi. Sur chaque surface mouillable, on dépose une goutte de liquide, 7 et 8.

Les surfaces 4 et 5 sont entourées par des zones 9 et 10 de préférence non mouillables par le liquide et d'épaisseur supérieure à celle des surfaces mouillables. Par exemple, le chrome n'est pas mouillable par le mercure. Leur fonction est de canaliser les gouttes 7 et 8 lors du fonctionnement du commutateur et de servir de butée à la plaquette 11. Une plaquette 11 en matériau optiquement transparent et libre de se déplacer est disposée au-dessus des surfaces 4 et 5. La plaquette 11 porte un élément 12 en matériau magnétique ou un aimant qui lui est lié solidairement, placé de telle manière qu'il n'interrompe pas le rayon lumineux 6.

Sous la plaque transparente 1, est disposé un enroulement magnétique 13, comportant éventuellement un noyau magnétique 14 destiné à en accroître l'efficacité. Dans ce cas, le noyau magnetique

14 est percé afin de laisser libre passage à un rayon lumineux 6. Le rayon lumineux 6 peut être conduit par une fibre optique 15.

L'application d'un courant dans la bobine 13 crée un champ magnétique attirant l'ensemble de la plaquette 11 et de l'élément 12 vers la bobine 13. Cette situation est représentée à la figure 1b où la plaquette 11 écrase les gouttes 7 et 8 de façon à ne former qu'une seule goutte 17 résultant de la déformation et de la jonction des gouttes 7 et 8. La goutte résultante 17 est alors appliquée par la plaquette 11 contre la face interne de la plaque transparente 1.

Les surfaces 9 et 10 non mouillables canalisent alors les gouttes pour qu'elles opèrent leur jonction. Elles servent également de butée à la plaquette 11 dans son déplacement. Ces surfaces peuvent être obtenues par des dépôts dont l'épaisseur peut aisément être contrôlée très précisément par les techniques habituelles de métallisation telles que celles utilisées par la fabrication des composants à semi-conducteurs.

La goutte alors formée vient épouser la face intérieure de la plaque 1 transparente ce qui a pour effet, dans le cas du mercure, d'obturer le rayon lumineux 6 d'une part, et d'autre part, de former un miroir plan qui peut renvoyer le rayon 6 dans sa direction de départ. La qualité du miroir plan ainsi formé ne dépend que de la planéité de la face intérieure. Une planéité excellente peut être obtenue dans le cas d'une plaque de verre.

Le commutateur représenté aux figures 1a et 1b peut fonctionner également pour un rayon lumineux 6' incident sur la plaque 2, représenté en pointillé sur la figure 1b. La réflexion a alors lieu sur la plaquette 11 qui est en contact avec la goutte 17.

Dans le cas où la goutte 17 a une géométrie telle que sa forme soit instable lorsqu'elle est libre, elle va se redissocier d'elle-même sous l'action de la tension superficielle lorsque le champ magnétique cessera, ce qui aura pour effet de replacer le système dans sa configuration originale (figure 1) grâce au fait que la plaque 1 est en matériau non mouillable.

6

Dans une autre configuration, la goutte peut se trouver dans un état stable et ne pas de redissocier spontanément. L'obtention de l'un ou l'autre mode de fonctionnement dépend dans une certaine mesure de la quantité de liquide et surtout du contour de la surface occupée par la goutte dans l'état où la plaquette est attirée. Ceci sera expliqué plus loin dans la description.

Dans l'un ou l'autre cas, la face inférieure de la plaquette 11 est de préférence en matériau non mouillable par le liquide, pour éviter que des traces de liquide ne perturbent la transmission du rayon lumineux quand le commutateur est en position de repos.

Le cas où la goutte écrasée 17 se trouve dans un état stable permet d'obtenir un système bi-stable. L'élément 12 peut être un aimant polarisé dans une direction parallèle à l'axe de la bobine 13. Par inversion du sens du courant dans la bobine 13, l'aimant 12 porté par la plaquette 11 est alternativement attiré et repoussé. La commande peut être réalisée par impulsions.

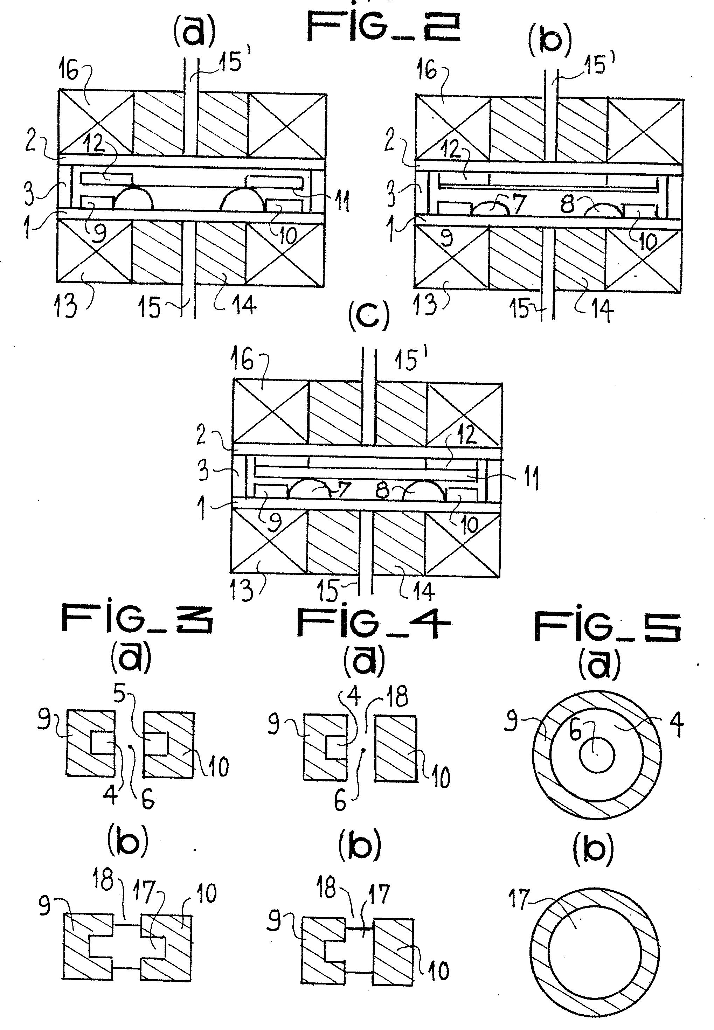

Selon une variante représentée à la figure 2a, un système bi-stable peut être obtenu en positionnant une seconde bobine 16 du côté de la plaque transparente 2. Une impulsion dans la bobine 13 suffit pour obturer le passage du rayon lumineux et le système reste de lui-même dans cette position. Une autre impulsion, dans la bobine 16, suffit pour écarter la plaquette 11 et donc de redissocier la goutte 17 en replaçant le système dans son état d'origine.

Selon la variante de la figure 2b, que le système soit ou non bi-stable, la plaquette 11 en position de repos vient en contact avec la plaque 2, mais elle ne se trouve plus en contact avec le liquide. Ceci peut être réalisé en faisant circuler en permanence un courant dans une bobine 13 ou 16 lorsque le commutateur est en position de repos, ou bien en remplaçant la bobine 16 par un aimant.

Selon une autre variante (figure 2c), la plaquette 11 en position de repos vient en contact avec la plaque 2, mais reste en contact avec le liquide. Cette mise en contact est préférentiellement obtenue par une force d'attraction de la plaquette 11 (bobine ou aimant par exemple). Un tel mode de réalisation permet d'obtenir un commutateur complètement insensible à l'orientation et très peu sensible aux sollicitations mécaniques (par exemple vibrations).

Selon la figure 3a, deux surfaces 4 et 5 mouillables par un liquide réfléchissant la lumière sont disposées symétriquement par rapport à la trace du rayon lumineux 6. Les surfaces 4 et 5 sont de forme carrée ou rectangulaire. Chacune est entourée sur ses trois côtés non situés en vis-à-vis de la trace 6, d'une surface respectivement 9, 10 non mouillable par le liquide, et plus épaisse que les surfaces mouillables 4 et 5. Les surfaces 9 et 10 ont ainsi pour fonction de canaliser les gouttes 7 et 8 (non représentées) et de servir de butée à la plaquette 11. Selon la figure 3b, une goutte unique 17 s'étend sur les surfaces mouillables 4 et 5, entre celles-ci, et partiellement entre les surfaces non mouillables 9 et 10 dans une zone formant deux canaux 18. On voit que les canaux 18 facilitent l'écoulement du liquide. Une tolérance assez grande sur la quantité de liquide existe donc de ce fait. A titre d'exemple, on réalise un commutateur monostable dont les surfaces 4 et 5 sont des carrés de 1 mm de côté, et les surfaces 9 et 10 de contour rectangulaire de 2 x 3 mm et une épaisseur de 0,2 mm. L'espacement entre les surfaces 4 et 5 est de 0,3 mm et la hauteur de la goutte avant écrasement est de 0,3 mm.

Selon la figure 4a, une surface 4 mouillable par un liquide réfléchissant la lumière est adjacente à la trace du rayon lumineux 6. La surface 4, de forme rectangulaire, est entourée sur ses trois côtés non situés en vis-à-vis de la trace 6, d'une surface 9 non mouillable par le liquide et plus épaisse que la surface 4, de manière à canaliser une goutte unique 17 de liquide et de servir de butée a la plaquette 11. Eventuellement, une surface 10 rectangulaire non mouillable par le liquide est disposée symétriquement aux surfaces 4 et 9 précitées par rapport à la trace du rayon lumineux 6. Selon la figure 4b, lorsque le commutateur est actif, la goutte 17 s'étend sur la surface 4 et au-delà, et obture le passage du rayon lumineux 6. En position de repos, la goutte 17 ne s'étend que sur la surface mouillable 4.

8

Selon la figure 5a, une seule surface mouillable 4 est mise en œuvre sous la forme d'une couronne intérieure entourée d'une couronne extérieure 9 plus épaisse et non mouillable par le liquide réfléchissant. Les deux couronnes sont centrées sur l'axe du rayon lumineux 6. Au repos, le liquide est réparti sur la surface mouillable 4 sous forme d'une goutte unique 17, et par application de la plaquette 11 qui vient en butée sur la couronne extérieure 9, la goutte 17 (figure 5b) obture le passage du rayon lumineux 6.

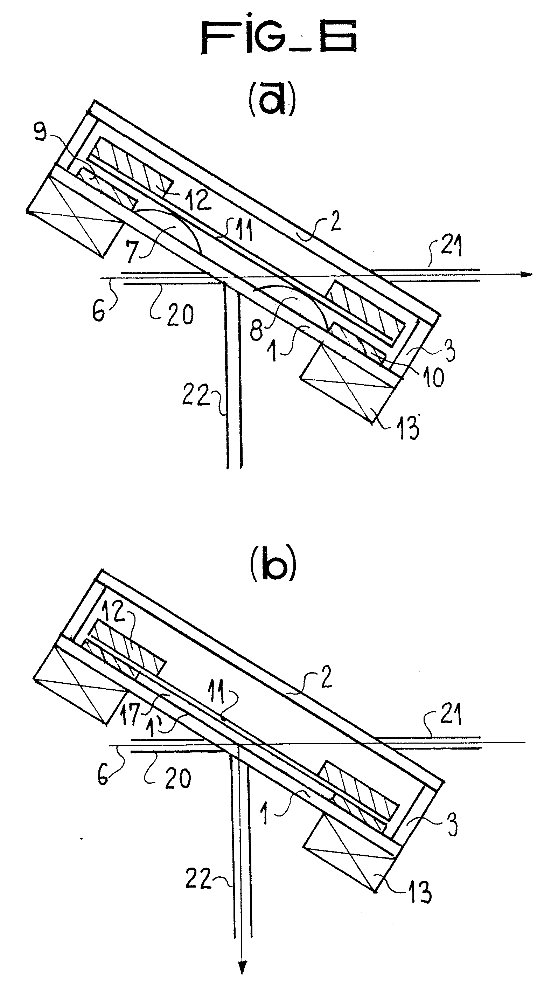

Selon la figure 6a, un dispositif selon l'invention reçoit un rayon lumineux 6, éventuellement par l'intermédiaire d'un conduit ou d'une fibre optique 20, incliné de 45° par rapport à la plaque transparente 1. Plus particulièrement, sur la figure 6a, le rayon lumineux 6 est horizontal et le commutateur optique, sensiblement identique à celui des figures 1a et 1b est incliné de 45° par rapport à l'horizontal. Son fonctionnement mettant en œuvre essentiellement des forces capillaires plutôt que des forces de pesanteur, le commutateur optique selon l'invention est en effet relativement insensible aux inclinaisons, et peut donc fonctionner en général dans toutes les positions. En position de repos du commutateur (figure 6a), le rayon lumineux 6 traverse le commutateur et ressort selon le même axe éventuellement dans une fibre ou un conduit optique 21. En position active du commutateur (figure 6b), le rayon lumineux 6 est dévié de 90°, à savoir dans une direction verticale, éventuellement dans une fibre ou un conduit optique 22.

Selon la figure 7a, un rayon lumineux 6' incident sur la paroi 2 du boîtier, éventuellement guidé par une fibre ou un conduit optique 23, traverse le commutateur en position de repos et ressort selon le même axe éventuellement dans une fibre ou un conduit optique 24. Selon la figure 7b, le commutateur mis en position de travail par venue en butée de la plaquette 11 sur les surfaces non mouillables 9 et 10. La goutte 17 de liquide formée comme indiqué plus haut interrompt le passage du rayon lumineux 6' qui se réfléchit alors sur la face de la plaquette 11 en contact avec le liquide. Le rayon lumineux 6' est alors dévié de 90° vers une fibre ou un conduit optique 25 (pour un rayon lumineux 6' de direction verticale et un commutateur incliné de 45°).

Selon la figure 8a, la plaquette 11 porte un élément magnétique 12 en son centre. Un rayon lumineux 6 est susceptible de traverser les plaques 1 et 3 et la périphérie de la plaquette 11 lorsque celle-ci est en position de repos. Une goutte unique 17 repose sur une surface mouillable par le liquide. En position de travail, la plaquette 11 vient en butée sur les surfaces 9 et 10 et la goutte 17 obture le passage des rayons lumineux.

La figure 8c représente les surfaces 9 et 10 et la goutte 17 en position de repos. Chacune des surfaces 9 et 10 présente une partie centrale 30 et deux branches latérales 31 et 32 formant avec celle-ci un U. En position de travail (figure 8b et 8d), la goutte 17 occupe l'espace libre à l'intérieur des branches 31 et 32 et une partie de l'espace compris entre les extrémités des branches respectivement 31 et 32.

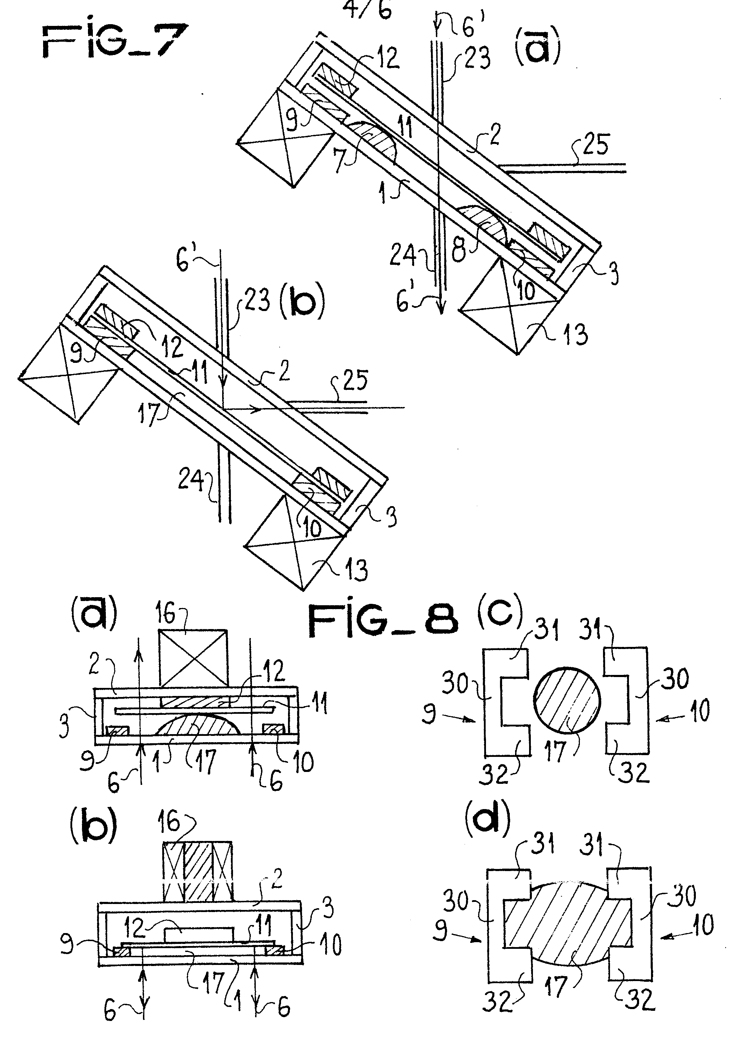

Selon la figure 9a, le commutateur optique met en oeuvre le phénomène de réflexion totale, à l'aide d'un liquide transparent d'indice donné. Un tel liquide est généralement à base d'eau, le verre réalisant une surface mouillable, et une couche fine et transparente de silicone réalisant une surface non mouillable.

L'angle d'incidence du rayon lumineux incident 6 est en effet choisi pour qu'il y ait réflexion totale de celui-ci sur la face intérieure 1, le rayon sortant après réflexion étant repéré en 40. Le liquide constituant les gouttes 7 et 8 présente un indice tel que, lorsque la plaquette 11 est en position de travail, il n'y ait plus réflexion totale et que le rayon lumineux soit transmis à travers la goutte écrasée 17. Un prisme 41 disposé sur la plaquette 11 permet d'éviter la réflexion totale au niveau de la plaquette 11. Il peut en être de même au niveau de la paroi 2 grâce à un prisme non représenté.

On comprendra toutefois que différents moyens peuvent être mis en oeuvre pour qu'il n'y ait plus réflexion totale lorsque le commutateur est en position de travail.

10

On peut choisir un liquide d'indice supérieur à celui de la paroi 1 de telle sorte qu'il ne se produise plus de réflexion totale sur la plaquette 11 et la plaque 2, généralement de même indice que la plaque 1.

On peut également choisir l'angle du prisme par rapport au rayon émergeant de la plaquette 11 de telle sorte qu'il produise une déviation du rayon lumineux d'un angle tel qu'il n'y ait pas réflexion totale sur la plaque 2.

On va maintenant expliciter de manière plus précise les mécanismes qui commandent l'état stable ou l'état instable d'une goutte 17.

Dans le commutateur optique selon l'invention, les mouvements du liquide sont commandés par les forces de tension superficielle.

On sait qu'une goutte de liquide tend vers la forme de surface externe minimale où elle a une énergie propre minimale, à savoir la sphère. Toute augmentation de la surface externe d'une goutte nécessite donc l'apport d'énergie extérieure.

Il en résulte que la position de travail, c'est-à-dire celle où la goutte 17 est écrasée, sera instable si le relèvement de la plaquette et la séparation des deux gouttes 7 et 8 va dans le sens d'une diminution de la surface externe totale du liquide.

Plus spécifiquement, les figures 10a et 10b montrent des variantes des profils des zones 9 et 10, favorables a l'instabilité de la goutte écrasée 17.

Sur la figure 10a, les zones 9 et 10 forment un U (30, 31, 32) qui entoure sur trois côtés les zones non mouillables 4 et 5. Chacun de ces U se prolonge pour fermer partiellement le quatrième côté des zones mouillables 4 et 5. Chaque branche 31 se prolonge ainsi par une branche 33 de même épaisseur, dont chacune est en vis-à-vis d'une branche 34 prolongeant la branche 32 correspondante et de même épaisseur que celle-ci. L'espace entre les branches 33 et 34 définit un canal 27.

11

Lors du déplacement de la plaquette 11, 12 vers sa position de travail, le liquide est guidé par le canal 27 et s'écoule également dans le volume tampon éventuellement constitué par des canaux 18 entre les branches 33 et entre les branches 34.

Lors du déplacement de la plaquette 11, 12 vers sa position de repos, il va y avoir diminution de la surface extérieure de la goutte sous l'action de la tension superficielle. La séparation de la goutte 17 en deux gouttes distinctes crée par contre une augmentation de la surface. Celle-ci est minimisée par le fait que le canal 27 a une section nettement plus faible que celle des zones 4 et 5, ce qui autorise le fonctionnement en monostable.

Selon la variante de la figure 10b, chaque branche 33 et 34 présente une zone profilée respectivement 35 et 36, de telle sorte que soit réalisé un canal 28 convergent, en forme de diabolo. Cette forme donne une plus grande possibilité d'expansion à la surface du liquide, tout en assurant une surface de contact minimale entre les deux gouttes de liquide, favorable à la réalisation d'un monostable.

La figure 11 représente un mode de réalisation de l'invention, fonctionnant en mode bistable. Pour ce faire, les branches 31 et 32 se prolongent par des bras respectivement 37 et 38 délimitant un canal 29 plus large que les surfaces mouillables 4 et 5. Dans cette configuration, la surface de contact entre les gouttes est augmentée. Pour fournir l'énergie correspondant à l'augmentation de surface externe qui se produit lors de la séparation des gouttes, il faut fournir un travail extérieur. Ce travail est fourni par l'énergie apportée pour faire passer la plaquette de sa position de travail à sa position de repos.

On notera que la largeur de l'espace entre les zones mouillables joue également un rôle étant donné que se produit, dans la zone non mouillable qui les sépare, une striction de la goutte d'autant plus importante que cette largeur est importante.

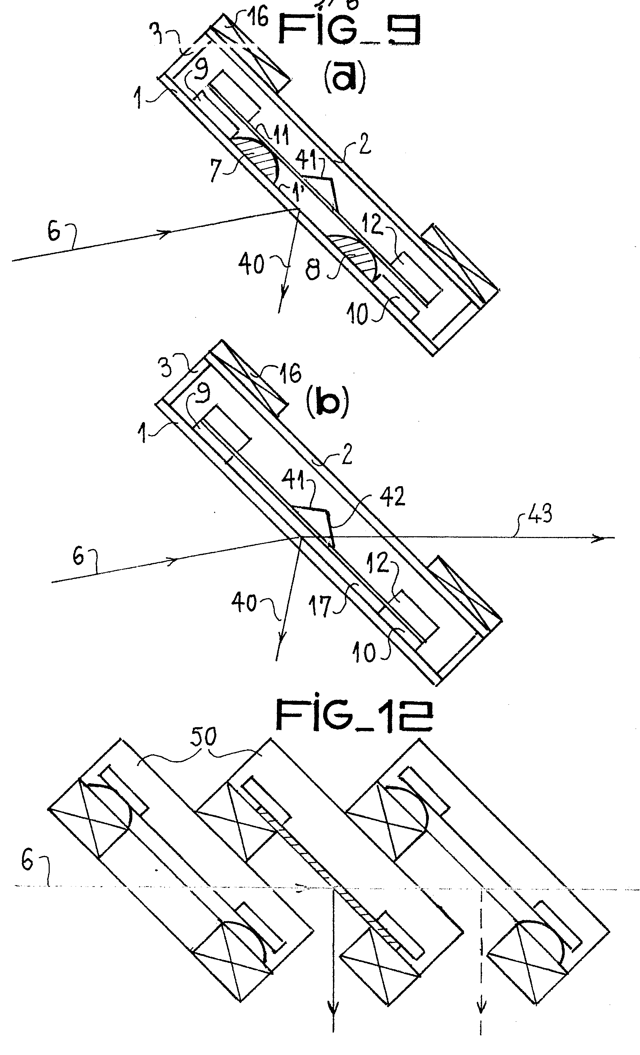

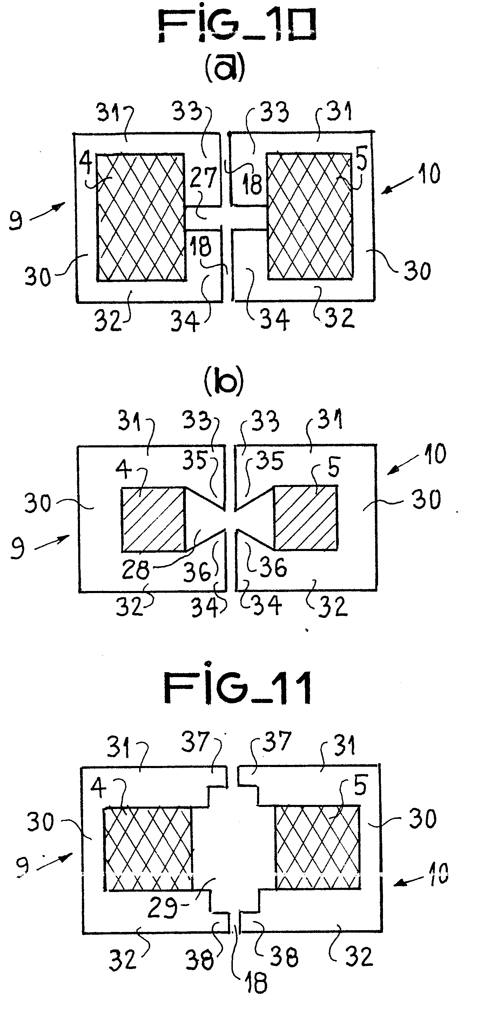

La figure 12 représente une matrice de commutation utilisant des commutateurs optiques selon l'invention. Des commutateurs optiques 50, du type représenté aux figures 6a et 6b, sont disposés

12

les uns à la suite des autres inclinés, de 45° par exemple, par rapport à un faisceau incident 6. La commutation s'effectue par réflexion du rayon lumineux sur un des commutateurs optiques qui a été commuté à cet effet.

Dans les modes de réalisation où le liquide est conducteur (par exemple le mercure) et où les surfaces mouillables 4 et 5 elles-même conductrices (par exemple le cuivre traité thermiquement à 300°C en présence de mercure), le commutateur peut être muni de bornes de sortie en contact électrique respectivement avec les surfaces conductrices 4 et 5. Ceci permet de vérifier le fonctionnement du commutateur. Ceci est particulièrement utile dans le cas des matrices de commutation.En d'autres termes, quand le commutateur est en position de repos, les bornes de sortie ne sont pas en contact électrique ; lorsque le commutateur est en position de travail, ce qui entraîne la déviation du rayon lumineux incident, les bornes de sortie sont en contact électrique.

L'invention ne se limite pas aux modes de réalisation décrits ci-dessus. Tout autre moyen permettant de déplacer la plaquette 11 de façon à écraser les gouttes, entre dans le champ de cette invention. Par exemple, l'élément magnétique 12 peut être remplacé par un élément piezo-électrique qui se dilate sous l'effet d'une tension électrique qui lui est appliquée. Il peut être également remplacé par un élément à déformation électrostatique fixé en un de ses points à la plaque 12. Ainsi, si on se reporte au mode de réalisation de la figure 2c, chaque élément 12 est remplacé par un élément piézo-électrique ou à déformation électrostatique qui s'appuie contre la paroi 2 et qui est solidaire de la plaquette 11, et on supprime les bobines 13 et 16. Dans le cas des figures 1a et 1b, la bobine de commande 13 peut être remplacée par un aimant mobile qui actionne le dispositif lorsqu'on l'approche.

13

REVENDICATIONS

1. Commutateur optique caractérisé en ce qu'il comporte une paroi transparente traversée en un endroit donné par un rayon lumineux incident (6, 6'), au moins une goutte (7, 8) de liquide étant disposée sur au moins une zone de ladite paroi, cette zone étant mouillable par le liquide et située au voisinage et en dehors de l'endroit où le rayon lumineux (6, 6') traverse la paroi transparente (1) et en ce qu'il comporte une pièce mobile (11, 12) à deux positions, une dite de repos pour laquelle ladite goutte (7, 8) repose sur ladite paroi (1) en dehors du passage du rayon lumineux (6, 6'), et une dite de travail où elle applique ladite goutte (17) contre la paroi (1) de manière à l'interposer sur le passage du rayon lumineux (6, 6') et à modifier la propagation de celui-ci.

2. Commutateur optique selon la revendication 1, caractérisé en ce que la pièce mobile (11, 12) est une plaquette présentant une région transparente (11) située dans le prolongement du rayon lumineux incident.

3. Commutateur optique selon l'une des revendications 1 ou 2, caractérisé en ce que la zone mouillable (4, 5) est bordée sur au moins un de ses côtés non en vis-à-vis de l'endroit où le rayon lumineux traverse la paroi transparente, par une zone plus épaisse (9, 10) de manière à produire une canalisation du liquide ainsi qu'une butée pour la pièce mobile (11, 12) lorsqu'elle se trouve en position de travail.

4. Commutateur optique selon la revendication 3, caractérisé en ce que la plaquette (11) porte un élément (12) en matériau magnétique ou un aimant, solidaire de celle-ci et en ce qu'il comporte un moyen de commande électro-magnétique (13, 14, 16) pour déplacer la plaquette entre sa position de repos et sa position de travail.

0090723

14

5. Commutateur optique selon l'une des revendications 2 à 4, caractérisé en ce que ladite région transparente de la plaquette (11, 12) est une zone centrale de celle-ci et en ce que la plaquette (11, 12), en position de repos, repose sur au moins deux gouttes (7, 8) situées de part et d'autre de la zone centrale transparente (11).

6. Commutateur optique selon la revendication 5, caracterisé en ce que, en position de repos, la plaquette (11, 12) est également en contact avec une seconde paroi transparente (2) formant avec ladite paroi transparente (1) un boîtier.

7. Commutateur optique selon l'une des revendications 5 ou 6, caractérisé en ce que la zone mouillable est bordée par une zone plus épaisse (9, 10, 33, 34, 35, 36, 37, 38) l'entourant a l'exception d'une région de canal (28) où les gouttes (7, 8) se rejoignent lorsque la pièce mobile (11, 12) est en position de travail.

8. Commutateur optique selon l'une des revendications précédentes, caractérisé en ce que le liquide est réfléchissant et en ce qu'il comporte un moyen (15, 15') pour diriger au moins un rayon lumineux incident (6, 6') perpendiculairement à une dite paroi transparente (1, 2) de manière à générer une fonction interrupteur optique.

9. Commutateur optique selon l'une des revendications précédentes, caractérisé en ce que le liquide est réfléchissant et en ce qu'il comporte un moyen (20, 23) pour diriger au moins un rayon lumineux incident (6, 6') suivant un angle donné avec une dite paroi transparente de manière à générer une fonction déviateur optique.

10. Commutateur optique selon l'une des revendications précédentes, caractérisé en ce qu'il comporte un moyen (20, 23) pour diriger au moins un rayon lumineux (6, 6') suivant un angle donne avec une dite paroi transparente, de manière à y créer une réflexion totale, et en ce que le liquide a un indice tel que, lorsque le commutateur est en position de travail, au moins une partie du rayon lumineux soit transmis.

11. Commutateur optique slcon la revendication 10, caractérisé en ce que la pièce mobile (11, 12) présente une face de sortie du rayon lumineux perpendiculaire à sa direction incidente.

12. Matrice de commutation, caractérisée en ce qu'elle comporte une pluralité de commutateurs optiques selon l'une des revendications précédentes, disposés les uns à la suite des autres par rapport à un rayon lumineux incident.

13. Commutateur optique selon une des revendications précédentes, caracérisé en ce que le liquide est conducteur et en ce que sont prévues des bornes de sortie en contact électrique respectivement avec chacune des zones mouillables (4, 5) celles-ci étant en matériau conducteur, de manière à permettre de vérifier le fonctionnement du commutateur.

FIG_1

(a)

(b)

2/6 FIG_2

FIG_3  FIG_4  FIG_5

FIG_6

(a)

(b)

# FIG_7

# FIG_8

# FIG_9

## (a)

## (b)

# FIG_12

# FIG_10

## (a)

## (b)

# FIG_11

0090723

Office européen
des brevets

**RAPPORT DE RECHERCHE EUROPEENNE**

Numéro de la demande

EP  83 40 0592

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | APPLIED OPTICS, vol. 12, no. 6, juin 1973, pages 1227-1239, New York, USA<br>G.W.  TAYLOR: "Electrical control of  light by fluid logic devices"<br>* Paragraphes IIA,IID; page 1231, colonne  de  droite,  dernier alinéa;  paragraphes H1,H2,H4,H6; figures 2,7,15 * | 1,8-12 | G 02 B   7/26 |
| A | IBM TECHNICAL DISCLOSURE BULLETIN, vol. 24, no. 3, août 1981, pages 1493-1495, New York, USA<br>F.  GFELLER:  "Bypass  switch for optical  fiber ring network" * En entier * | 1,8 | |
| A | EP-A-0 042 907  (IBM)<br>* Revendications 1-4; figure 1 * | 1 | DOMAINES TECHNIQUES RECHERCHES (Int. Cl. ³) |
| A | US-A-3 572 896  (S. BERTRAM)<br><br>* Colonne  2, ligne 61 - colonne 3,  ligne 37; revendications 1-4; figures 4-7 * | 1,2,4, 9,10 | G 02 B   7/26<br>G 02 F   1/01<br>G 02 F   1/19<br>G 02 F   1/315 |
| A | EP-A-0 025 097  (IBM)<br>* Revendication 1; figures 1,2 * | 1 | |

---     -/-

Le présent rapport de recherche a été établi pour toutes les revendications

| Lieu de la recherche<br>LA HAYE | Date d'achèvement de la recherche<br>15-07-1983 | Examinateur<br>BORMS F. |
|---|---|---|

Office européen
des brevets

**RAPPORT DE RECHERCHE EUROPEENNE**

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | APPLIED PHYSICS LETTERS, vol. 40, no. 1, janvier 1982, pages 4-6, New York, USA<br>J.L.    JACKEL    et    al.: "Electrowetting optical switch" * Figure 2 * | 1,8 | |
| | --- | | |
| A | DE-C-1 092 814  (IBM) | 1 | |
| | ----- | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAVE | 15.07.1983 | BORMS F. |